# EUROPÄISCHE PATENTSCHRIFT

(11) **EP 2 082 258 B1**
(45) Veröffentlichungstag und Bekanntmachung des Hinweises auf die Patenterteilung: **26.12.2012**
(21) Anmeldenummer: 07803234.9
(22) Anmeldetag: 05.09.2007
(51) Int. Cl.: G01S 7/521, G10K 9/122

(54) **ULTRASCHALLWANDLER**
ULTRASONIC TRANSDUCER
TRANSDUCTEUR À ULTRASONS

(30) Priorität: 24.10.2006 DE 102006050037
(43) Veröffentlichungstag der Anmeldung: 29.07.2009
(73) Patentinhaber: Robert Bosch GmbH, 70442 Stuttgart (DE)
(72) Erfinder: REICHE, Martin, 71263 Weil der Stadt (DE)
(86) Internationale Anmeldenummer: PCT/EP2007/059270
(87) Internationale Veröffentlichungsnummer: WO 2008/049681

(56) Entgegenhaltungen:
- DE-A1- 3 721 209
- DE-A1- 10 123 612
- DE-A1- 10 341 900
- GB-A- 2 097 630

## Beschreibung

### STAND DER TECHNIK

Die vorliegende Erfindung betrifft einen Ultraschallwandler für ein Fahrzeug und ein entsprechendes Verfahren zum Herstellen eines solchen Ultraschallwandlers.

Ultraschallwandler werden bei Kraftfahrzeugen zum Beispiel für eine Einparkhilfe eingesetzt. Die Einparkhilfe umfasst beispielsweise ein Steuergerät und Ultraschallsensoren, die mit derartigen Ultraschallwandlern versehen sind. Zu diesem Zweck ist insbesondere ein Ausschwingverhalten des Ultraschallwandlers für eine so genannte Nahmessfähigkeit eine entscheidende funktionale Anforderung (zum Beispiel < 20cm). Ein Ultraschallsensor weist ein Gehäuse auf, in dem der Ultraschallwandler eingebracht ist. Derartige Ultraschallwandler bestehen im Allgemeinen aus einem Membrantopf und einem darin angeordneten Wandlerelement. Der Membrantopf wird üblicherweise aus einem metallischen Werkstoff, wie zum Beispiel Aluminium, geformt oder gefräst. Er wird aus Korrosionsschutz- und Lackiergründen mit einem Primer beschichtet. Das elektromechanische Wandlerelement (z.B. ein Piezoelement) wird auf den Gehäuseboden aufgebracht, beispielsweise geklebt, und kontaktiert. Das Gehäuse wird mit einem dämpfenden Material aufgefüllt. Eine Möglichkeit dazu bildet ein eingespritzter Silikonschaum. Diese Herstellungsschritte sind aus verschiedenen Gründen technisch nicht trivial und damit nicht an beliebige Produktionsorte verlagerbar. Insbesondere bedarf der chemische Prozess des Schäumens exakter Parameter und ist in der Fertigung schwierig umzusetzen.

Anstelle einer Ausschäumung des Gehäuseinnenraums kann man eine Bedämpfung durch Einlage von Schaumteilen in das Gehäuse erreichen. Dadurch wäre der Produktionsschritt des Ausschäumens durch einen manuell einfach zu beherrschenden Schritt ersetzt. Allerdings zeigt sich dabei, dass solche Sensoren dadurch ein ungünstigeres Ausschwingverhalten im Vergleich zu Ausführungen mit einer Ausschäumung aufweisen, welches die entscheidende funktionale Anforderung nach einer Nahmessfähigkeit beeinträchtigt. Jedoch muss insbesondere der mechanische Kraftschluss des Bedämpfungsmaterials an Topfwand und Membran über Alterung und Temperatur gewährleistet sein. Dies ist bei Einlegeteilen nur durch Teile mit Übermaß und Einsetzen mit Vorspannung erfüllbar, was Aufwand in der Fertigung und der Gehäusekonstruktion bedeutet, die die Vorspannung abfangen muss. Somit ist der Kraftschluss durch formexaktes Verfüllen mit flüssigen Werkstoffen günstiger erreichbar, welche danach aushärten.

Durch Messungen der spektralen Anteile der Ausschwingvorgänge hat sich herausgestellt, dass ein wesentlicher Anteil auf Resonanzen außerhalb der Arbeitsfrequenz (48 kHz) des Ultraschallsensors beruht, wobei insbesondere Anteile um 30 kHz und 70 kHz bedeutend sind. Diese werden durch Kipp- und Knautschbewegungsabläufe in der Gehäusewand verursacht. Eine Abhilfemaßnahme dagegen wurde bisher in einer Verdickung des Membrantopfes durch einen Wulst am oberen Wandrand ausgeführt, wodurch die Topfwand versteift wird, jedoch die angeregten Schwingungsmoden nicht bedämpft werden. Damit werden die Schwingungen am Topfrand bzw. Wulst durch Fehlanpassung der mechanischen Impedanz reflektiert, sie werden aber nicht in thermische Energie umgewandelt, wodurch eine Dämpfung stattfinden würde.

Zur Bedämpfung der Gehäusewandschwingungen werden weiterhin Gehäusefüllstoffe verwendet, die aus Dämpfungswerkstoffen bestehen und/oder solche zusätzlich enthalten. Ein Werkstoff, beispielsweise ein stark bedämpfendes Ausschäummaterial, der den Innenraum des Membrantopfs mit einer nahezu homogenen Konsistenz ausfüllt, ergibt dadurch nicht nur eine große Bedämpfung der Wandschwingungen sondern auch der Nutzschwingungen der Membran des Membrantopfs. Dies führt zu einem kleinen elektroakustischen Wirkungsgrad des Ultraschallwandlers. Die Ansteuerelektronik, d.h. Sendestromquelle und Übertrager, gerät bei zu hoher Bedämpfung in Sättigungseffekte, welche zudem die Bandbreite des abgestimmten Systems Wandler/Beschaltung reduzieren.

Eine weitere Abhilfemaßnahme besteht in einem äußeren Entkopplungsring, der auf die Wand des Membrantopfs aufgebracht ist. Messtechnisch ist dabei nachweisbar, dass bei Serienwandlerkonstruktionen die Wandmoden dann nahezu komplett unterdrückt werden. Der mechanische Kontakt dieses Entkopplungsrings mit der äußeren Wand des Membrantopfs ist aber äußeren Umwelteinflüssen wie zum Beispiel Verschmutzung, Verkantung des Sensors in seinem Halter, Versprödung des Entkopplungsrings oder eindringendem Wasser ausgesetzt.

Die DE 199 12 772 A1 beschreibt einen Ultraschallsensor zur Abstandsmessung, wobei ein Membrantopf mit einer elliptischen und kreisförmigen Ausnehmung über einem Wandlerelement mit einer Mehrzahl von Isolatoren bestückt ist, die übereinander geschichtet sind und von einem Bohrungssicherungsring in einer Ringnut mechanisch im Membrantopf gehalten werden. Eine Anbindung an die Innenwand ist nicht beschrieben. Diese Isolatoren bestehen zum Beispiel aus unterschiedlichen Dämpfungswerkstoffen wie einer Silikonscheibe, Filz und Kork. Die Isolatoren weisen die Form der elliptischen Ausnehmung auf und bedecken das Wandlerelement vollständig.

In der DE 199 17 862 A1 ist ein Ultraschallsensor beschrieben, dessen piezoelektrisches Wandlerelement von einem schallabsorbierenden Material bedeckt ist. Dieses kann zum Beispiel Filz sein. Ein isolierendes Harz, beispielsweise Silikon- oder Urethangummi, dichtet das piezoelektrische Wandlerelement und das schallabsorbierende Material ab. Der Innenraum des Membrantopfs weist eine elliptische und kreisförmige Kontur auf. Das Wandlerelement ist auf der Membran befestigt und von einem Ringabschnitt umgeben, der zum Beispiel eine dünnere Wandstärke als der Abschnitt aufweist, auf dem das Wandlerelement aufgebracht ist. In einer Ausführung sind Wandlerelement und Ringabschnitt vollständig von dem schallabsorbierenden Material bedeckt. In einer anderen Ausführung ist der das Wandlerelement umgebende Ringabschnitt der Membran mit einem isolierenden Harz mit einer geringen Schichtstärke bedeckt. Es kann zum Beispiel Silikon- oder Urethanharz sein. Hierdurch wird die ungewollte Schwingung des Ringabschnitts mit dünnerer Wandstärke gedämpft. Eine Anbindung dieser dünnen Bedämpfungsschicht des isolierenden Harzes mit der Innenwand des Membrantopfs ist nicht beschrieben.

Ein Ultraschallsensor gemäß der Beschreibung der DE 103 41 900 A1 weist einen Innenraum eines Membrantopfs auf, der über einem Wandlerelement schichtartig mit Filz und darüber mit einem Silikongummi ausgefüllt ist. In dem Silikongummi ist ein Abschnitt aus einem Silikonschaum mit Blasen angeordnet. Das Silikongummi dichtet den Membrantopf ab. Die Filzschicht bedeckt das Wandlerelement vollständig und wird von dem Silikongummi vollständig bedeckt.

### OFFENBARUNG DER ERFINDUNG

Der erfindungsgemäße Ultraschallwandler weist demgegenüber den Vorteil auf, dass ein Membrantopf in seinem unteren Bereich bis zu einer festlegbaren Höhe einen konzentrischen Aufbau aus einem homogenen Material aufweist, dessen Innenbereich über der Piezokeramik auf der Fläche der Nutzschwingung mit einem schwach bedämpfenden Material gefüllt ist. Ein weiterer Vorteil besteht darin, dass die Bauteile so gestaltet sind, dass eine Herstellung des Ultraschallsensors keine schwer zu beherrschenden Prozesse aufweist und eine manuelle Fertigung in einfacher Weise ermöglicht wird.

Der Kern der Erfindung besteht darin, dass der Ultraschallwandler einen Membrantopf aufweist, der in einem Randbereich bzw. Ringabschnitt um das Wandlerelement herum ein Dämpfungselement mit starker Dämpfung aufweist, welches mit der Membran und der Innenwand kraftschlüssig verbunden ist und zentrisch über dem Wandlerelement ein weiteres Dämpfungselement mit schwacher Dämpfung aufweist.

Der Bereich über dem Wandlerelement wird somit nur schwach bedämpft, der konzentrisch um diesen angeordnete Ringabschnitt der Membran wird durch das darauf kraftschlüssig angeordnete Dämpfungselement mit hoher Dämpfung stark bedämpft, wobei die Innenwand des Membrantopfs auch mit dem Dämpfungselement mit hoher Dämpfung kraftschlüssig verbunden ist. Dadurch werden ähnlich einer Diagonalen, welche ein Parallelogramm aussteift, die Kipp- und Knautschbewegungen der Wand des Membrantopfs in Bezug zur Membranebene von dem Dämpfungselement aufgenommen. Dabei wird die kinetische Energie der unerwünschten Schwingungen in dem Dämpfungselement in Wärme umgewandelt.

Das zweite Dämpfungselement ist konzentrisch um das erste Dämpfungselement angeordnet, wobei das erste Dämpfungselement im Wesentlichen keinen Kontakt mit der Innenwand des Membrantopfs aufweist.

Dieser Aufbau ist besonders vorteilhaft, da eine selektive Bedämpfung nach funktionellem Bedarf vorhanden ist: Niedrige Bedämpfung der Nutzschwingung und hohe Bedämpfung der Wandschwingungen.

Ein besonderer Vorteil besteht darin, dass der Membrantopf eine Geometrie aufweisen kann, die ein Serienmembrantopf besitzt, wodurch keine Neukonstruktion erforderlich ist und auf bewährte Bauteile mit hoher Qualität zurückgegriffen werden kann.

Der Ultraschallwandler bleibt auf seiner Arbeitsfrequenz (48 kHz) niederohmig und damit vorteilhaft effizient. Er ist mit kleineren Sendespannungen ansteuerbar und hat im Mikrofonbetrieb höhere Generatorspannungen. Ersteres ist gleichbedeutend mit dem verringerten Risiko der schleichenden Depolarisation der Piezokeramik des Wandlerelementes und einer höheren Übersteuerungsgrenze bzgl. Übertrager und Sendestromquelle. Letzteres ist gleichbedeutend mit größeren Signal-/Störabständen bei Mikrofonbetrieb bzw. Empfang.

Der Ultraschallwandler einschließlich der inneren Bedämpfungskonstruktion ist unabhängig vom Gehäuse des Ultraschallsensors herstellbar und hinsichtlich seiner Parameter prüfbar. Damit können Prozessabläufe vorteilhaft entflochten (zum Beispiel getrennte Standorte von Wandler- und Sensorfertigung) und Ausschuss in der Sensorendprüfung reduziert werden.

Gemäß der Erfindung weist der Ultraschallwandler, insbesondere für ein Fahrzeug, mit einem Membrantopf mit einer umlaufenden Wand, Folgendes auf: einen im Membrantopf auf einem Wandlerabschnitt auf einer Innenseite einer Membran angebrachtes Wandlerelement zur Erzeugung von Ultraschallschwingungen; ein im Membrantopf auf dem Wandlerelement angeordnetes erstes Dämpfungselement zur Bedämpfung der Membran; und ein im Membrantopf in einem um das Wandlerelement herum angeordneten Randabschnitt der Membran angeordnetes zweites Dämpfungselement zur Bedämpfung von Schwingungen der Wand; wobei das zweite Dämpfungselement sowohl mit dem Randabschnitt als auch mit einer Innenseite der Wand zumindest abschnittsweise kräftschlüssig verbunden ist.

Die Bedämpfung der Wandmoden erfolgt vorteilhaft ohne Einfluss und Notwendigkeit eines äußeren Entkopplungsrings auf ein nahezu messtechnisch nicht mehr nachweisbares Niveau. Damit entfällt vorteilhaft das Risiko von Umwelteinflüssen auf den Übergang zwischen Entkopplungsring und Membrantopfwand.

In einer weiteren Ausführung ist im Membrantopf über dem ersten und zweiten Dämpfungselement ein drittes Dämpfungselement zur weiteren Bedämpfung und/oder Abdichtung des Membrantopfs angeordnet.

In einer bevorzugten Ausführung ist vorgesehen, dass das erste Dämpfungselement und das zweite Dämpfungselement als Einlegebauteile ausgebildet sind. Dadurch ist sowohl automatische Fertigung als auch Handfertigung vorteilhaft möglich. Ein Kraftschluss zur Membran bzw. zur Wand kann durch Übermaß bzw. mechanische Spannung oder durch Verklebung erreicht werden.

Weiter ist in einer Ausführungsform bevorzugt, dass das zweite Dämpfungselement eine Kontur, welche komplementär zu einer Kontur des Membrantopfs ist, und eine Durchgangsöffnung zur Aufnahme des ersten Dämpfungselementes aufweist. Dadurch ist ein konzentrischer Aufbau der beiden Dämpfungselemente möglicht, wobei die beiden Elemente als Einlegeteile entsprechend an anderer Stelle vorteilhaft vorgefertigt werden können.

In einer alternativen Ausführung ist das erste Dämpfungselement als ein Einlegebauteil ausgebildet, wobei das zweite Dämpfungselement aus einem Gießwerkstoff, vorzugsweise einem Elastomer mit Mikroballons, im Membrantopf hergestellt ist. Hierbei ist vorteilhaft eine Anpassung und Anbindung des zweiten Dämpfungselementes an die Membran und die Innenwand des Membrantopfs möglich. Bei Verguss erfolgt ein exakter vollflächiger Kraftschluss an Membran und Wand und je nach Materialwahl eine Verklebung. Die Mikroballons in dem Elastomer bewirken eine weitere vorteilhafte Bedämpfung der Wandschwingungen, wobei diese in thermische Energie umgewandelt werden.

In weiterer Ausführung ist das dritte Dämpfungselement aus einem Gießwerkstoff, vorzugsweise einem Zweikomponentenelastomer, ausgebildet. Dabei kann dieses Dämpfungselement vorteilhaft einfach eingebracht werden.

Es ist in bevorzugter Ausführung vorgesehen, dass das erste Dämpfungselement einen Schaumwerkstoff, vorzugsweise einen geschlossenporigen Schaumwerkstoff, aufweist. Dadurch wird ein Übergangsbereich zwischen dem ersten und zweiten Dämpfungselement verbessert, da ein Aufsaugen des zweiten Dämpfungselementes im flüssigen Zustand in das erste Dämpfungselement nicht erfolgt und somit ein vorteilhaft verbesserter Übergang der akustischen Impedanzen zwischen diesen Dämpfungselementen erzielt wird. Durch Vermeiden des Aufsaugens wie z.B. bei einem Filzwerkstoff ist der Ort der Grenzschicht des Übergangs der Impedanzen der Dämpfungselemente besser reproduzierbar.

In einer weiteren alternativen Ausführung ist vorgesehen, dass das erste Dämpfungselement an seiner Oberseite eine größere Weite als an seiner Unterseite aufweist, wobei die Weite an seiner Oberseite größer ist als die Weite der Durchgangsöffnung des zweiten Dämpfungselementes. Dadurch wird erreicht, dass das erste Dämpfungselement zum Beispiel vorteilhaft einfach durch Vorspannung durch seine konische Gestalt ohne weitere Hilfsmittel, wie z.B. eine Klebeschicht, in der Durchgangsöffnung des zweiten Dämpfungselementes befestigbar ist.

In einer noch weiteren alternativen Ausführung ist das dritte Dämpfungselement einstückig mit dem zweiten Dämpfungselement ausgebildet. In diesem Fall kann der gleiche Werkstoff verwendet und ein Arbeitsgang vorteilhaft eingespart werden.

Es ist in einer weiteren Ausführung vorgesehen, dass das erste und zweite Dämpfungselement eine senkrecht von der Innenseite der Membran an gemessene vorher festgelegte Höhe aufweisen. Hierbei ist die Höhe vorzugsweise bei beiden Elementen gleich groß. Dadurch ergibt sich ein vorteilhafter konzentrischer Aufbau, wobei das dritte Dämpfungselement auf dem ersten und zweiten Dämpfungselement vorteilhaft plan aufliegt.

Das Prinzip dieser Dämpfungsaufbauten schließt Membranaufbauten mit ein, in denen der piezoelektrische Wandler auf einem Podest aufliegt bzw. in einer Vertiefung angebracht ist.

Ein erfindungsgemäßes Verfahren zum Herstellen eines erfindungsgemäßen Ultraschallwandlers weist folgende Verfahrensschritte auf:
(S1) Einbringen des zweiten Dämpfungselementes in den Membrantopf, wobei das zweite Dämpfungselement mit der Innenwand des Membrantopfs und dem Randbereich der Innenseite der Membran des Membrantopfs kraftschlüssig verbunden wird; und
(S2) Einfügen des ersten Dämpfungselementes in die Durchgangsöffnung des zweiten Dämpfungselementes oder Einfügen des ersten Dämpfungselementes in die Durchgangsöffnung des zweiten Dämpfungselementes und Verschließen des Membrantopfs mit dem dritten Dämpfungselement zum Herstellen des Ultraschallwandlers.

Hier wird vorteilhaft erreicht, dass mit einfachen und wenigen Fertigungsschritten unter Zeitersparnis ein Ultraschallwandler mit einem Ausschwingverhalten hergestellt wird, das den Anforderungen entspricht. Eine aufwändige Neukonstruktion des Membrantopfs ist nicht erforderlich.

Hierbei besteht der Vorteil darin, dass ein schwierig zu beherrschender Schäumprozess durch einen einfachen mechanischen Füllprozess ersetzt wird. Die akustische Eigenschaft des zu verfüllenden Elastomers ist durch seine Parameter (Dichte, Shore-Härte, Durchmesser der Mikroballons) vordefiniert und ändert sich durch einen, beispielsweise thermischen, Aushärtungsprozess nicht mehr.

In einer alternativen Ausführung ist vorgesehen, dass vor dem Einbringen des zweiten Dämpfungselementes ein Kern mit der Form und den Abmessungen des ersten Dämpfungselementes auf dem Wandlerelement entfernbar aufgebracht und das zweite Dämpfungselement als gießbarer Werkstoff in den Bereich zwischen diesem Kern und der Innenwand des Membrantopfs eingebracht wird, und wobei nach dem Aushärten des zweiten Dämpfungselementes der Kern zur Bildung der Durchgangsöffnung entfernt wird. Dadurch sind vorteilhaft einfache und bekannte Füllprozesse anwendbar. Eine kraftschlüssige Verbindung zwischen dem zweiten Dämpfungselement und der Membran sowie der Membrantopfinnenwand benötigt vorteilhaft keinen zusätzlichen Verbindungswerkstoff, wie zum Beispiel Kleber.

Ein alternatives erfindungsgemäßes Verfahren zum Herstellen eines erfindungsgemäßen Ultraschallwandlers weist folgende Verfahrensschritte auf:
(S1) Einbringen des ersten Dämpfungselementes in den Membrantopf, wobei das erste Dämpfungselement auf dem Wandlerelement befestigt wird; und
(S2) Eingießen des zweiten Dämpfungselementes in den Bereich zwischen dem ersten Dämpfungselement und der Innenwand des Membrantopfs oder Eingießen des ersten Dämpfungselementes in den Bereich zwischen dem ersten Dämpfungselement und der Innenwand des Membrantopfs und Verschließen des Membrantopfs mit dem dritten Dämpfungselement zum Herstellen des Ultraschallwandlers.

In dieser Version besteht der Vorteil darin, dass der Kern für das einzugießende zweite Dämpfungselement eine so genannte "verlorene Form" bildet und das erste Dämpfungselement ist, wobei er vorteilhaft an Ort und Stelle verbleiben kann.

In einer weiteren bevorzugten Ausführung ist vorgesehen, dass das Verschließen des Membrantopfs durch weiteres Eingießen von Werkstoff des zweiten Dämpfungselementes in den Membrantopf zum Ausbilden des dritten Dämpfüngselementes erfolgt. Hierbei wird vorteilhaft der Werkstoff des zweiten Dämpfungselementes auch für das dritte Dämpfungselement verwendet. Der Verguss des zweiten und dritten Dämpfungselementes erfolgt dann vorteilhafterweise in nur einem Produktionsschritt.

Es ergeben sich weitere folgende Vorteile.

Das schwer zu beherrschende Reaktionsgleichgewicht zwischen Treibmittelausdehnung und Adhäsion eines Silikons beim Schäumprozess desselben wird durch einen einfachen mechanischen Einsetzprozess bzw. Einsetz- und Einfüllprozess ersetzt. Beim Verfüllstoff sind die akustisch relevanten Daten wie Shore-Härte, Dichte u.ä. vordefiniert und nicht vom Vulkanisationsprozess abhängig.

Das erste und zweite Dämpfungselement in Form eines Einlegeteils ist in vorteilhaft einfacher Weise herstellbar, zum Beispiel durch Stanzen.

Der Verzicht auf den Wulst beim Gehäuse bedeutet Vorteile bei der Rohfertigung des Gehäuses durch Fließpressen.

Durch die hohe Sendeeffizienz und verbesserten Rausch-/Störabstände beim Empfang ist der erfindungsgemäße Ultraschallwandler gut geeignet zur Realisierung größerer Reichweiten für erweiterte Funktionen wie Parklückenvermessung, Überwachung toter Winkel, LSF usw.

Weitere Vorteile und Merkmale der Erfindung sind der Beschreibung und den Zeichnungen entnehmbar.

### KURZE BESCHREIBUNG DER ZEICHNUNGEN

Die Erfindung wird nachfolgend anhand des in den Figuren der Zeichnung angegebenen Ausführungsbeispiels näher erläutert.

Es zeigt dabei:
FIG. 1 eine schematische Schnittdarstellung eines beispielhaften Membrantopfs eines Ultraschallwandlers;
FIG. 2 eine schematische Schnittdarstellung eines ersten Ausführungsbeispiels eines erfindungsgemäßen Ultraschallwandlers;
FIG. 3 eine schematische Schnittdarstellung des ersten Ausführungsbeispiels längs Schnittlinien X-X nach FIG. 2;
FIG. 4 eine schematische Schnittdarstellung des ersten Ausführungsbeispiels längs Schnittlinien Y-Y nach FIG. 2;
FIG. 5 eine schematische Schnittdarstellung eines zweiten Ausführungsbeispiels des erfindungsgemäßen Ultraschallwandlers;
FIG. 6 eine perspektivische Ansicht eines beispielhaften Dämpfungselementes; und
FIG. 7 eine perspektivische Ansicht eines weiteren beispielhaften Dämpfungselementes.

### AUSFÜHRUNGSFORMEN DER ERFINDUNG

Gleiche oder ähnliche Bauteile mit gleichen oder ähnlichen Funktionen sind in den Figuren mit gleichen Bezugszeichen versehen.

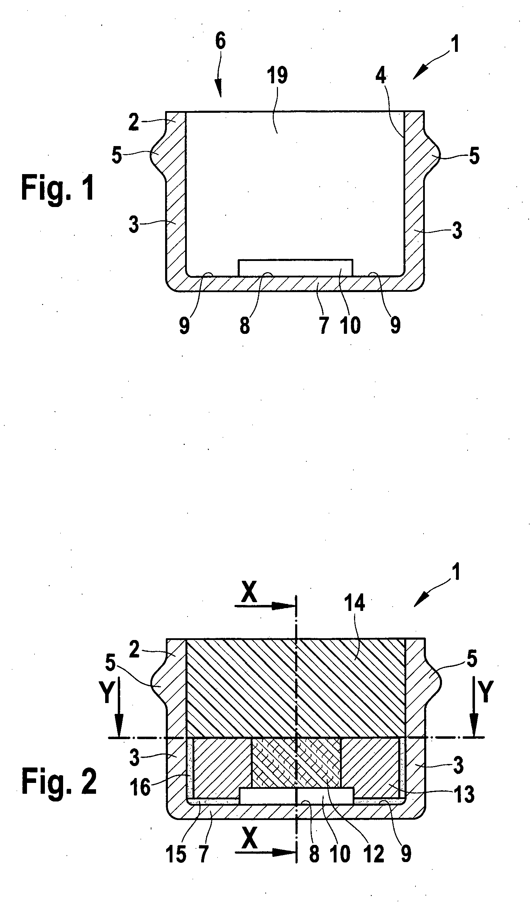

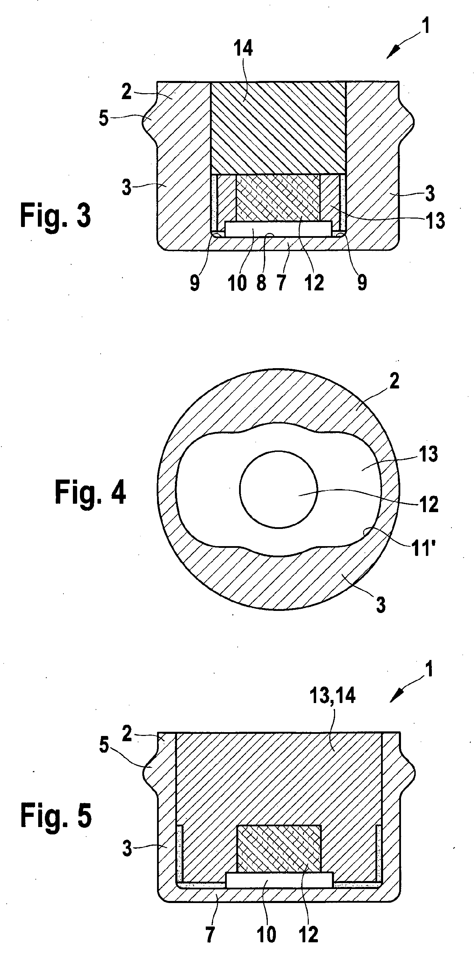

In Fig. 1 ist ein erfindungsgemäßer Ultraschallwandler 1 in einer Schnittdarstellung als eine übliche Ausführung in einer Vorstufe vor Befüllung mit Dämpfungselementen gezeigt. Ein Membrantopf 2, vorzugsweise in zylindrischer Form, weist eine umlaufende Wand 3 mit einer unten liegenden Membran 7 auf. Weiterhin besitzt der Membrantopf 2 an seiner Oberseite eine Öffnung 6, die zum Beispiel eine bestimmte Kontur 11' (siehe Fig. 4) aufweist. An der Außenseite des Membrantopfs 2 ist in der Nähe der Öffnung eine Verdickung 5 angeordnet, welche beispielsweise zur Verbindung mit einem nicht gezeigten Halteelement und/oder Entkopplungsring vorgesehen ist. Der Membrantopf 2 ist in diesem Beispiel ein fließgepresstes Aluminiumteil.

Die umlaufende Wand des Membrantopfs 2 umschließt einen Innenraum 19, innerhalb dessen auf der Innenseite der Membran 7 ein Wandlerelement 8, zum Beispiel ein Piezowandler, in einem Wandlerabschnitt 8 aufgebracht ist, beispielsweise mit einem Kleber. Der Wandlerabschnitt 8 ist konzentrisch um die Mittelachse des Membrantopfs 2 angeordnet und von einem Randabschnitt 9 umgeben.

Fig. 2 zeigt eine schematische Schnittdarstellung eines ersten Ausführungsbeispiels eines erfindungsgemäßen Ultraschallwandlers 1 mit Dämpfungselementen 12, 13 und 14.

Über dem Wandlerelement 10 ist konzentrisch zur Mittelachse des Membrantopfs 2 ein erstes Dämpfungselement 12 angeordnet, wobei in diesem Beispiel ein bestimmter Randbereich der Oberseite des Wandlerelementes 10 nicht vom ersten Dämpfungselement 12 bedeckt ist. Das erste Dämpfungselement 12 kann zum Beispiel ein gestanztes Einlegeteil sein, das auf dem Wandlerelement 10 mittels eines doppelseitigen Klebebands oder Klebers befestigt ist. Das erste Dämpfungselement ist beispielsweise ein Filzwerkstoff oder ein Schaumstoffteil und weist einen niedrigen Dämpfungswert auf. Um dieses erste Dämpfungselement 12 herum ist über dem Randabschnitt 9 der Membran 7 ein zweites Dämpfungselement 13 mit einem hohen Dämpfungswert konzentrisch herum angeordnet, wobei dieses mit dem Randabschnitt 9 mit einem ersten Befestigungselement 15 und mit der Innenwand des Membrantopfs 2 mit einem zweiten Befestigungselement 16 kraftschlüssig verbunden ist. Es ist bevorzugt, dass diese kraftschlüssige Verbindung flächig ausgebildet ist. Die Befestigungselemente 15, 16 können in einer Ausführung zum Beispiel bestimmte Klebstoffe sein. Durch diese Befestigung ergibt sich eine diagonale Aussteifung zwischen Wand 3 und der Membran 7, wodurch bei Betrieb des Ultraschallwandlers 1 Kipp- und Knautschbewegungen der Wand 3 in Bezug zur Ebene der Membran 7 von dem zweiten Dämpfungselement 13 aufgenommen und zur Bedämpfung in thermische Energie umgesetzt werden.

Das erste und zweite Dämpfungselement 12 und 13 erstrecken sich in Richtung der Mittelachse des Membrantopfs 2 in eine von der Innenseite der Membran 7 her gemessene vorher festlegbar Höhe, die bevorzugt bei beiden gleich groß ist. Auf dieser so gebildeten Oberseite der Dämpfungselemente 12 und 13 ist ein drittes Dämpfungselement 14 angeordnet, welches den oberen Innenraum 19 des Membrantopfs 2 bis zu seiner Oberkante der Öffnung 16 anfüllt und abdichtet. In einem Ausführungsbeispiel ist das dritte Dämpfungselement 14 ein Zweikomponenten-Elastomer.

Somit weist dieser Aufbau eine selektive Bedämpfung nach funktionalem Bedarf auf: Die Nutzschwingung der Membran 7 im Wandlerabschnitt 8 wird durch das erste Dämpfungselement 12 mit einer niedrigen Bedämpfung versehen, wobei die Wandschwingungen bzw. die Kipp-/Knautschbewegungsmoden der Wand relativ zur Membran durch das zweite Dämpfungselement 13 stark bedämpft werden.

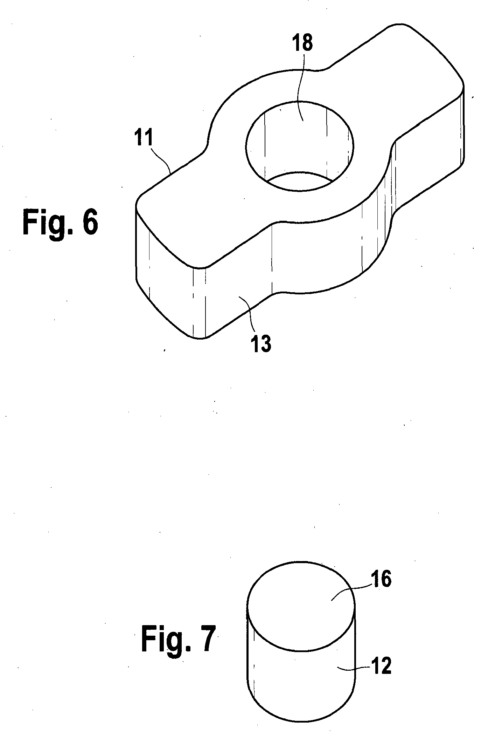

Fig. 3 zeigt eine Schnittansicht des ersten Ausführungsbeispiels nach Fig. 2 längs Schnittlinien X-X. Der innere Querschnitt des Membrantopfs 2 weist hier eine besondere Gestalt auf, die in Fig. 4, einer Schnittansicht längs Schnittlinien Y-Y nach Fig. 2, dargestellt ist. Diese Gestalt besitzt eine Kontur 11', die in diesem Beispiel aus einer ovalartigen und einer kreisförmigen Ausnehmung besteht. Das erste Dämpfungselement 12 ist hier mit kreisförmigem Querschnitt ausgeführt und ist von dem zweiten Dämpfungselement 13 umgeben, welches in seiner Außengestalt die Kontur 11 (siehe Fig. 6) der Kontur 11' der Innenwand des Membrantopfs 2 aufweist. Es ist bei dieser Ausführung zu erkenne, dass sich die Kontur 11 in einer Querachse des Membrantopfs ovalartig und in einer rechtwinklig dazu angeordneten Querachse kreisabschnittförmig erstreckt, wodurch sich unterschiedliche Wanddicken des Membrantopfs 2 ergeben, die die Richtcharakteristik des Ultraschallwandlers 1 beeinflussen.

Fig. 5 zeigt eine schematische Schnittdarstellung eines zweiten Ausführungsbeispiels des erfindungsgemäßen Ultraschallwandlers 1, wobei das zweite Dämpfungselement 13 mit dem dritten Dämpfungselement 14 einstückig ausgebildet ist.

Schließlich zeigen Fig. 6 und 7 die Dämpfungselemente 13 und 12 als Einlegebauteile. In dieser Ausführung ist das zweite Dämpfungselement 13 aus einem Elastomerwerkstoff mit den Abmessungen des Innenraums 19 des Membrantopfs 2 in einer bestimmten Höhe gestanzt und weist eine Durchgangsöffnung 18 für das erste Dämpfungselement 12 auf, welches in diesem Beispiel zylindrische Gestalt aufweist.

In einer anderen Ausführung weist die Oberseite 17 des ersten Dämpfungselementes 12 einen größeren Durchmesser auf als seine Unterseite, wodurch sich eine vorteilhafte Klemmung beim Einsetzen des ersten Dämpfungselementes 12 in der Durchgangsöffnung 18 des zweiten Dämpfungselementes 13 erfolgen kann.

Zum Herstellen des Ultraschallwandlers 1 werden nun drei verschiedene Verfahren angegeben, welche aber nicht einschränkend sind.

Im Falle von Einlegeteilen wird zunächst das zweite Dämpfungselement 13 in den unteren Bereich des Innenraums 19 des Membrantopfs 2 so eingeklebt, dass es mit seiner Unterseite mit der Innenseite der Membran 7 im Randabschnitt 9 und mit seiner Außenseite mit der Innenseite der Wand 3 des Membrantopfs 2 kraftschlüssig verbunden ist. Das erste Dämpfungselement 12 wird dann in die Durchgangsöffnung 18 des zweiten Dämpfungselementes eingesetzt, wobei seine Unterseite mit der Oberseite des Wandlerelementes 10, zum Beispiel mittels Klebeband, verbunden wird. Auch eine Verklebung der Außenseite des ersten Dämpfungselementes 12 in der Durchgangsöffnung 18 mit dem zweiten Dämpfungselement 13 ist denkbar. Im Falle von Filz als Werkstoff für das erste Dämpfungselement 12 wird ganz auf Verklebung in Richtung des zweiten Dämpfungselementes 13 bzw. der Membran 7 verzichtet. Das erste Dämpfungselement 12 aus Filz hält in diesem Beispiel dann allein durch seine Formgebung, wie zum Beispiel leichtes Übermaß oder Konizität, in der Durchgangsöffnung 18.

In einer anderen Version wird, wie oben schon erwähnt, das erste Dämpfungselement 12 in der Durchgangsöffnung 18 auf Grund seiner unterschiedlichen Durchmesser bzw. Weiten mechanisch festgesetzt. Dies gilt genau für den Filzwerkstoff mit leicht erweitertem Durchmesser bzgl. Durchgangsöffnung 18.

Danach wird das dritte Dämpfungselement 14 in das restliche Volumen des Membrantopfs 2 eingebracht, beispielsweise in Form eines Zweikomponenten-Elastomers vergossen. Damit wird der Innenraum des Membrantopfs 2 außerdem gleichzeitig abgedichtet.

Ein weiteres Herstellverfahren sieht vor, dass zunächst eine Form bzw. ein Kern mit der Gestalt des ersten Dämpfungselementes 12 auf dem Wandlerelement 10 entfernbar aufgebracht wird. Dann wird das zweite Dämpfungselement 13 in Form eines flüssigen Elastomers in den Randbereich um den Kern herum eingefüllt und thermisch ausgehärtet. Hierbei entspricht der Füllstand des noch flüssigen Elastomers der Höhe der Oberseite des Kerns, der die Abmessungen des ersten Dämpfungselementes 12 aufweist. Nach Aushärtung des zweiten Dämpfungselementes 13 wird der Kern wieder entfernt, der eine Durchgangsöffnung 18 für das erste Dämpfungselement 12 gebildet hat und durch das erste Dämpfungselement 12 ersetzt, das wie oben beschrieben eingesetzt wird. Ein kraftschlüssiger Verbund des zweiten Dämpfungselementes 13 mit dem Randabschnitt 9 der Membran 7 und der Innenseite der Wand 3 des Membrantopfs 2 wird durch das Elastomer des zweiten Dämpfungselementes 13 selbst ausgebildet. Dann wird das dritte Dämpfungselement 14 in das restliche Volumen des Membrantopfs 2 wie oben erläutert eingebracht.

Bei einem besonders bevorzugten Herstellverfahren wird das erste Dämpfungselement 12 als "verlorener Kern" auf dem Wandlerelement 10 konzentrisch mittels eines doppelseitigen Klebebands oder Transferklebers befestigt. Ein Elastomer wird als zweites Dämpfungselement 13 in den Randbereich um das erste Wandlerelement 12 herum eingegossen und ausgehärtet, wobei sich die oben erwähnte kraftschlüssige Verbindung mit der Membran 7 und der Wand 3 ausbildet. Dann wird das dritte Dämpfungselement 14 in das restliche Volumen des Membrantopfs 2 wie oben erläutert eingebracht. In einem weiteren Vereinfachungsschritt werden das zweite und dritte Dämpfungselement 13 und 14 im gleichen Vergussschritt aus gleichem Material hergestellt.

Versuche haben ergeben, dass mit einer solchen Anordnung einer selektiven Bedämpfung und diagonaler Aussteifung des Membrantopfs 2 eines Ultraschallwandlers 1 Ausschwingwerte vorteilhaft unter 20 cm erreichbar sind. Dabei ist ein äußerer Entkopplungsring (nicht gezeigt) nicht notwendig, da die Wandmoden durch die Erfindung auf ein nahezu messtechnisch nicht mehr nachweisbares Niveau bedämpft werden.

Das Prinzip der obigen Dämpfungsaufbauten schließt Membranaufbauten mit ein, in denen das piezoelektrische Wandlerelement 10 zum Beispiel auf einem Podest auf der Membran 7 aufliegt bzw. in einer Vertiefung der Membran 7 angebracht ist.

Die Erfindung ist nicht auf die oben beschriebenen Ausführungsbeispiele beschränkt, sondern auf vielfältige Art und Weise modifizierbar.

Die oben beschriebenen Kontur 11, 11' kann selbstverständlich andere Formen, zum Beispiel Tropfenform, aufweisen.

Bei Verwendung eines flüssigen Werkstoffs für das zweite Dämpfungselement 13 ist es besonders bevorzugt, dass das erste Dämpfungselement 12 aus einem geschlossenporigem Schaumwerkstoff ausgebildet ist, da somit ein definierter Übergangsbereich zwischen der Außenwand des ersten Dämpfungselementes 12 in der Durchgangsöffnung 18 zum zweiten Dämpfungselement 13 vorteilhaft ermöglicht ist. Als Werkstoff für das zweite Dämpfungselement 13 hat sich ein Elastomer bewährt, welches mit Mikroballons versetzt ist, da somit vorteilhaft Dämpfungsparameter vorher einstellbar sind.

## Patentansprüche

1. Ultraschallwandler (1), insbesondere für ein Fahrzeug, mit einem Membrantopf (2) mit einer umlaufenden Wand (3), mit:
- einem im Membrantopf (2) auf einem Wandlerabschnitt (8) auf einer Innenseite einer Membran (7) angebrachten Wandlerelement (10) zur Erzeugung von Ultraschallschwingungen;
- einem im Membrantopf (2) auf dem Wandlerelement (10) angeordneten ersten Dämpfungselement (12) zur Bedämpfung der Membran (7); und
- einem im Membrantopf (2) in einem um das Wandlerelement (10) herum angeordneten Randabschnitt (9) der Membran (7) angeordneten zweiten Dämpfungselement (13) zur Bedämpfung von Schwingungen der Wand (3);
wobei das zweite Dämpfungselement (13) sowohl mit dem Randabschnitt (9) als auch mit einer Innenseite (4) der Wand (3) zumindest abschnittsweise kraftschlüssig verbunden ist.

2. Ultraschallwandler (1) nach Anspruch 1,
**dadurch gekennzeichnet,**
**dass** im Membrantopf (2) über dem ersten und zweiten Dämpfungselement (12, 13) ein drittes Dämpfungselement (14) zur weiteren Bedämpfung und/oder Abdichtung des Membrantopfs (2) angeordnet ist.

3. Ultraschallwandler (1) nach Anspruch 1 oder 2,
**dadurch gekennzeichnet,**
**dass** das erste Dämpfungselement (12) einen Werkstoff mit einem niedrigen Dämpfungswert und das zweite Dämpfungselement (13) einen Werkstoff mit einem hohen Dämpfungswert aufweist.

4. Ultraschallwandler (1) nach einem der Ansprüche 1 bis 3,
**dadurch gekennzeichnet,**
**dass** das erste Dämpfungselement (12) und das zweite Dämpfungselement (13) als Einlegebauteile ausgebildet sind.

5. Ultraschallwandler (1) nach Anspruch 4,
**dadurch gekennzeichnet,**
**dass** das zweite Dämpfungselement (13) eine Kontur (11), welche komplementär zu einer Kontur (11') des Membrantopfs (2) ist, und eine Durchgangsöffnung (18) zur Aufnahme des ersten Dämpfungselementes (12) aufweist.

6. Ultraschallwandler (1) nach einem der Ansprüche 1 bis 3,
**dadurch gekennzeichnet,**
**dass** das erste Dämpfungselement (12) als ein Einlegebauteil ausgebildet ist, wobei das zweite Dämpfungselement (13) aus einem Gießwerkstoff im Membrantopf (2) hergestellt ist.

7. Ultraschallwandler (1) nach Anspruch 6,
**dadurch gekennzeichnet,**
**dass** das zweite Dämpfungselement (13) ein Elastomer ist, welches Mikroballons aufweist.

8. Ultraschallwandler (1) nach einem der Ansprüche 2 bis 7,
**dadurch gekennzeichnet,**
**dass** das dritte Dämpfungselement (14) aus einem Gießwerkstoff, vorzugsweise einem Zweikomponentenelastomer, ausgebildet ist.

9. Ultraschallwandler (1) nach einem der Ansprüche 1 bis 8,
**dadurch gekennzeichnet,**
**dass** das erste Dämpfungselement (12) einen Schaumwerkstoff aufweist.

10. Ultraschallwandler (1) nach Anspruch 9,
**dadurch gekennzeichnet,**
**dass** der Schaumwerkstoff geschlossenporig ausgebildet ist.

11. Ultraschallwandler (1) nach einem der Ansprüche 1 bis 10,
**dadurch gekennzeichnet,**
**dass** das erste Dämpfungselement (12) an seiner Oberseite (17) eine größere Weite als an seiner Unterseite aufweist, wobei die Weite an seiner Oberseite (17) größer ist als die Weite der Durchgangsöffnung (18) des zweiten Dämpfungselementes (13).

12. Ultraschallwandler (1) nach einem der Ansprüche 2 bis 11,
**dadurch gekennzeichnet,**
**dass** das dritte Dämpfungselement (14) einstückig mit dem zweiten Dämpfungselement (13) ausgebildet ist.

13. Ultraschallwandler (1) nach einem der Ansprüche 1 bis 12,
**dadurch gekennzeichnet,**
**dass** das erste und zweite Dämpfungselement (12, 13) eine senkrecht von der Innenseite der Membran (7) an gemessene vorher festgelegte Höhe aufweisen.

14. Ultraschallwandler (1) nach Anspruch 13,
**dadurch gekennzeichnet,**
**dass** das erste und zweite Dämpfungselement (12, 13) eine senkrecht von der Innenseite der Membran (7) an gemessene vorher festgelegte gleich große Höhe aufweisen.

15. Verfahren zum Herstellen eines Ultraschallwandlers (1) nach einem der Ansprüche 1 bis 5 oder 8 bis 14, mit folgenden Verfahrensschritten:
(S1) Einbringen des zweiten Dämpfungselementes (13) in den Membrantopf (2), wobei das zweite Dämpfungselement (13) mit der Innenwand (4) des Membrantopfs (2) und dem Randbereich (9) der Innenseite der Membran (7) des Membrantopfs (2) kraftschlüssig verbunden wird; und
(S2) Einfügen des ersten Dämpfungselementes (12) in die Durchgangsöffnung (18) des zweiten Dämpfungselementes (13) oder Einfügen des ersten Dämpfungselementes (12) in die Durchgangsöffnung (18) des zweiten Dämpfungselementes (13) und Verschließen des Membrantopfs (2) mit einem dritten Dämpfungselement (14) zum Herstellen des Ultraschallwandlers (1).

16. Verfahren nach Anspruch 15,
**dadurch gekennzeichnet,**
**dass** vor dem Einbringen des zweiten Dämpfungselementes (13) ein Kern mit der Form und den Abmessungen des ersten Dämpfungselementes (12) auf dem Wandlerelement (10) entfernbar aufgebraucht und das zweite Dämpfungselement (13) als gießbarer Werkstoff in den Bereich zwischen diesem Kern und der Innenwand (4) des Membrantopfs (2) eingebracht wird, und wobei nach dem Aushärten des zweiten Dämpfungselementes (13) der Kern zur Bildung der Durchgangsöffnung (18) entfernt wird.

17. Verfahren zum Herstellen eines Ultraschallwandlers (1) nach einem der Ansprüche 1 bis 3 oder 6 bis 14, mit folgenden Verfahrensschritten:
(S1) Einbringen des ersten Dämpfungselementes (12) in den Membrantopf (2), wobei das erste Dämpfungselement (13) auf dem Wandlerelement (10) befestigt wird; und
(S2) Eingießen des zweiten Dämpfungselementes (13) in den Bereich zwischen dem ersten Dämpfungselement (12) und der Innenwand (4) des Membrantopfs (2) oder Eingießen des zweiten Dämpfungselcmentes (13) in den Bereich zwischen dem ersten Dämpfungselement (12) und der Innenwand (4) des Membrantopfs (2) und Verschließen des Membrantopfs (2) mit dem dritten Dämpfungselement (14) zum Herstellen des Ultraschallwandlers (1).

18. Verfahren nach Anspruch 16 oder 17,
**dadurch gekennzeichnet,**
**dass** das Verschließen des Membrantopfs (2) durch weiteres Eingießen von Werkstoff des zweiten Dämpfungselementes (13) in den Membrantopf (2) zum Ausbilden des dritten Dämpfungselementes (14) erfolgt.

## Claims

1. Ultrasound transducer (1), in particular for a vehicle, having a diaphragm pot (2) with an encircling wall (3), having:
- a transducer element (10), which is mounted in the diaphragm pot (2) on a transducer portion (8) on an inner side of a diaphragm (7), for generating ultrasound vibrations;
- a first damping element (12), which is arranged in the diaphragm pot (2) on the transducer element (10), for damping the diaphragm (7); and
- a second damping element (13), which is arranged in the diaphragm pot (2) in an edge portion (9), which is arranged around the transducer element (10), of the diaphragm (7), for damping vibrations of the wall (3); wherein the second damping element (13) is connected in a non-positively locking manner at least in portions both to the edge portion (9) and also to an inner side (4) of the wall (3).

2. Ultrasound transducer (1) according to Claim 1,
**characterized**
**in that**, in the diaphragm pot (2), a third damping element (14) for further damping and/or sealing of the diaphragm pot (2) is arranged above the first and the second damping element (12, 13).

3. Ultrasound transducer (1) according to Claim 1 or 2,
**characterized**
**in that** the first damping element (12) has a material with a low damping value and the second damping element (13) has a material with a high damping value.

4. Ultrasound transducer (1) according to one of Claims 1 to 3,
**characterized**
**in that** the first damping element (12) and the second damping element (13) are formed as insert components.

5. Ultrasound transducer (1) according to Claim 4,
**characterized**
**in that** the second damping element (13) has a contour (11), which is complementary to a contour (11') of the diaphragm pot (2), and a passage opening (18) for receiving the first damping element (12).

6. Ultrasound transducer (1) according to one of Claims 1 to 3,
**characterized**
**in that** the first damping element (12) is formed as an insert component, wherein the second damping element (13) is produced in the diaphragm pot (2) from a pouring material.

7. Ultrasound transducer (1) according to Claim 6,
**characterized**
**in that** the second damping element (13) is an elastomer which has microballoons.

8. Ultrasound transducer (1) according to one of Claims 2 to 7,
**characterized**
**in that** the third damping element (14) is formed from a pouring material, preferably a two-component elastomer.

9. Ultrasound transducer (1) according to one of Claims 1 to 8,
**characterized**
**in that** the first damping element (12) has a foam material.

10. Ultrasound transducer (1) according to Claim 9, **characterized**
**in that** the foam material is of closed-pored form.

11. Ultrasound transducer (1) according to one of Claims 1 to 10,
**characterized**
**in that** the first damping element (12) has a greater width on its top side (17) than on its underside, wherein the width on its top side (17) is greater than the width of the passage opening (18) of the second damping element (13).

12. Ultrasound transducer (1) according to one of Claims 2 to 11,
**characterized**
**in that** the third damping element (14) is formed in one piece with the second damping element (13).

13. Ultrasound transducer (1) according to one of Claims 1 to 12,
**characterized**
**in that** the first and the second damping element (12, 13) have a predetermined height as measured vertically from the inner side of the diaphragm (7).

14. Ultrasound transducer (1) according to Claim 13,
**characterized in that** the first and the second damping element (12, 13) have an equal predetermined height as measured vertically from the inner side of the diaphragm (7).

15. Method for producing an ultrasound transducer (1) according to one of Claims 1 to 5 or 8 to 14, having the following method steps:
(S1) introducing the second damping element (13) into the diaphragm pot (2), wherein the second damping element (13) is connected in a non-positively locking manner to the inner wall (4) of the diaphragm pot (2) and to the edge region (9) of the inner side of the diaphragm (7) of the diaphragm pot (2); and
(S2) inserting the first damping element (12) into the passage opening (18) of the second damping element (13) or inserting the first damping element (12) into the passage opening (18) of the second damping element (13) and closing off the diaphragm pot (2) by means of a third damping element (14) in order to produce the ultrasound transducer (1).

16. Method according to Claim 15,
**characterized**
**in that**, before the introduction of the second damping element (13), a core with the shape and the dimensions of the first damping element (12) is removably attached to the transducer element (10) and the second damping element (13) is introduced as a pourable material into the region between said core and the inner wall (4) of the diaphragm pot (2), and wherein after the second damping element (13) hardens, the core is removed so as to form the passage opening (18).

17. Method for producing an ultrasound transducer (1) according to one of Claims 1 to 3 or 6 to 14, having the following method steps:
(S1) introducing the first damping element (12) into the diaphragm pot (2), wherein the first damping element (13) is fastened to the transducer element (10); and
(S2) pouring the second damping element (13) into the region between the first damping element (12) and the inner wall (4) of the diaphragm pot (2) or pouring the second damping element (13) into the region between the first damping element (12) and the inner wall (4) of the diaphragm pot (2), and closing off the diaphragm pot (2) by means of the third damping element (14) in order to produce the ultrasound transducer (1).

18. Method according to Claim 16 or 17,
**characterized**
**in that** the closing of the diaphragm pot (2) is realized by pouring further material of the second damping element (13) into the diaphragm pot (2) so as to form the third damping element (14).

## Revendications

1. Convertisseur (1) d'ultrasons, en particulier pour véhicule, doté d'une cuvette (2) à membrane et une paroi périphérique (3), le convertisseur présentant :
un élément convertisseur (10) qui produit des vibrations ultrasoniques, installé dans la cuvette (2) à membrane sur une partie (8) du convertisseur disposée sur la face intérieure d'une membrane (7),
un premier élément d'amortissement (12) qui amortit la membrane (7), disposé dans la cuvette (2) à membrane sur l'élément convertisseur (10) et
un deuxième élément d'amortissement (13) qui amortit les vibrations de la paroi (3), disposé dans la cuvette (2) à membrane dans une bordure (9) de la membrane (7) disposée autour de l'élément convertisseur (10),
le deuxième élément d'amortissement (13) étant relié au moins par partie en correspondance mécanique à la fois à la bordure (9) et à une face intérieure (4) de la paroi (3).

2. Convertisseur (1) d'ultrasons selon la revendication 1, **caractérisé en ce qu'**un troisième élément d'amortissement (14) qui amortit encore et/ou assure l'étanchéité de la cuvette (2) à membrane est disposé dans la cuvette (2) à membrane au-dessus du premier et du deuxième élément d'amortissement (12, 13).

3. Convertisseur (1) d'ultrasons selon les revendications 1 ou 2, **caractérisé en ce que** le premier élément d'amortissement (12) présente un matériau dont la valeur d'amortissement est basse et le deuxième élément d'amortissement (13) un matériau dont la valeur d'amortissement est élevée.

4. Convertisseur (1) d'ultrasons selon l'une des revendications 1 à 3, **caractérisé en ce que** le premier élément d'amortissement (12) et le deuxième élément d'amortissement (13) sont configurés comme composants à insérer.

5. Convertisseur (1) d'ultrasons selon la revendication 4, **caractérisé en ce que** le deuxième élément d'amortissement (13) présente un contour (11) complémentaire du contour (11') de la cuvette (2) à membrane et une ouverture de passage (18) qui permet de reprendre le premier élément d'amortissement (12).

6. Convertisseur (1) d'ultrasons selon l'une des revendications 1 à 3, **caractérisé en ce que** le premier élément d'amortissement (12) est configuré comme composant à insérer, le deuxième élément d'amortissement (13) étant réalisé en un matériau coulé dans la cuvette (2) à membrane.

7. Convertisseur (1) d'ultrasons selon la revendication 6, **caractérisé en ce que** le deuxième élément d'amortissement (13) est un élastomère qui présente des microballons.

8. Convertisseur (1) d'ultrasons selon l'une des revendications 2 à 7, **caractérisé en ce que** le troisième élément d'amortissement (14) est formé d'un matériau coulé et de préférence d'un élastomère à deux composants.

9. Convertisseur (1) d'ultrasons selon l'une des revendications 1 à 8, **caractérisé en ce que** le premier élément d'amortissement (12) présente un matériau moussé.

10. Convertisseur (1) d'ultrasons selon l'une des revendications 9, **caractérisé en ce que** le matériau moussé est à pores fermés.

11. Convertisseur (1) d'ultrasons selon l'une des revendications 1 à 10, **caractérisé en ce que** le premier élément d'amortissement (12) présente sur sa face supérieure (17) une plus grande largeur que sur sa face inférieure, la largeur de la face supérieure (17) étant supérieure à la largeur de l'ouverture de passage (18) du deuxième élément d'amortissement (13).

12. Convertisseur (1) d'ultrasons selon l'une des revendications 2 à 11, **caractérisé en ce que** le troisième élément d'amortissement (14) est formé d'une seule pièce avec le deuxième élément d'amortissement (13) .

13. Convertisseur (1) d'ultrasons selon l'une des revendications 1 à 12, **caractérisé en ce que** le premier et le deuxième élément d'amortissement (12, 13) présentent une cavité formée préalablement et verticale partant de la face inférieure de la membrane (7).

14. Convertisseur (1) d'ultrasons selon la revendication 13, **caractérisé en ce que** le premier et le deuxième élément d'amortissement (12, 13) présentent des cavités préalablement formées, de même taille et qui s'étendent perpendiculairement à la face inférieure de la membrane (7).

15. Procédé de fabrication d'un convertisseur (1) d'ultrasons selon l'une des revendications 1 à 5 ou 8 à 14, le procédé présentant les étapes suivantes :
(S1) placement du deuxième élément d'amortissement (13) dans la cuvette (2) à membrane, le deuxième élément d'amortissement (13) étant relié en correspondance mécanique à la paroi intérieure (4) de la cuvette (2) à membrane et à la bordure (9) de la face inférieure de la membrane (7) de la cuvette (2) à membrane et
(S2) insertion du deuxième élément d'amortissement (12) dans l'ouverture de passage (18) du deuxième élément d'amortissement (13) ou insertion du premier élément d'amortissement (12) dans l'ouverture de passage (18) du deuxième élément d'amortissement (13) et fermeture de la cuvette (2) à membrane par un troisième élément d'amortissement (14), pour fabriquer le convertisseur (1) à ultrasons.

16. Procédé selon la revendication 15, **caractérisé en ce qu'**avant le placement du deuxième élément d'amortissement (13), une âme qui présente la forme les dimensions du premier élément d'amortissement (12) est placée de manière amovible sur l'élément convertisseur (10) et le deuxième élément d'amortissement (13) est apporté sous la forme d'un matériau coulé dans l'espace situé entre cette âme et la paroi intérieure (4) de la cuvette (2) à membrane, l'âme étant enlevée pour former l'ouverture de passage (18) après le durcissement du deuxième élément d'amortissement (13).

17. Procédé de fabrication d'un convertisseur (1) à ultrasons selon l'une des revendications 1 à 3 ou 6 à 14, le procédé présentant les étapes suivantes :
(S1) placement du premier élément d'amortissement (12) dans la cuvette (2) à membrane, le premier élément d'amortissement (13) étant fixé sur l'élément convertisseur (10) et
(S2) coulée du deuxième élément d'amortissement (13) dans l'espace situé entre le premier élément d'amortissement (12) et la paroi intérieure (4) de la cuvette (2) à membrane ou coulée du deuxième élément d'amortissement (13) dans l'espace situé entre le premier élément d'amortissement (12) et la paroi intérieure (4) de la cuvette (2) à membrane et fermeture de la cuvette (2) à membrane par le troisième élément d'amortissement (14) en vue de former le convertisseur (1) à ultrasons.

18. Procédé selon les revendications 16 ou 17, **caractérisé en ce que** la fermeture de la cuvette (2) à membrane s'effectue en poursuivant la coulée du matériau du deuxième élément d'amortissement (13) dans la cuvette (2) à membrane de manière à former le troisième élément d'amortissement (14).
